# EUROPÄISCHE PATENTANMELDUNG

(11) **EP 1 128 119 A2**
(43) Veröffentlichungstag der Anmeldung: **29.08.2001**
(21) Anmeldenummer: 01102433.8
(22) Anmeldetag: 03.02.2001
(51) Int. Cl.: F16L 27/12, F16L 21/03

(54) **Vorrichtung zur Abdichtung**

(30) Priorität: 25.02.2000 DE 10008862; 29.06.2000 DE 10030803; 02.09.2000 DE 10043280
(71) Anmelder: Bode GmbH, D-22549 Hamburg (DE)
(72) Erfinder: Bode, Michael, Dipl.-Ing, 22609 Hamburg (DE); Nowack, Eckard, 25364 Brandehörnerkirchen (DE)
(74) Vertreter: Hansmann, Dierk, Dipl.-Ing.

(57) **Zusammenfassung**

Die Vorrichtung dient zur Abdichtung von relativ zueinander teleskopierbaren Rohrsegmenten (1,2) und ist als ein im Bereich eines Endes des einen Rohrsegmentes (1) anordbares ringartiges Dichtelement (5) ausgebildet. Das Dichtelement (5) besteht mindestens bereichsweise aus einem elastischen Material. Darüber hinaus ist das Dichtelement (5) mit einem Außensteg (6), einem Innensteg (7) und einem den Außensteg (6) mit dem Innensteg (7) verbindenen Quersteg (8) versehen. Der Außensteg (6), der Innensteg (7) und der Quersteg (8) sind aus einem härteren Material als eine aus dem elastischen Material bestehende Profildichtung (11,17) ausgebildet.

## Beschreibung

Die Erfindung betrifft eine Vorrichtung zur Abdichtung von relativ zueinander teleskopierbaren Rohrsegmenten, die als ein im Bereich eines Endes des einen Rohrsegmentes anordbares ringartiges Dichtelement ausgebildet ist, das mindestens bereichsweise aus einem elastischen Material besteht.

Derartige Vorrichtungen werden beispielsweise verwendet, um im Bereich des Tiefbaus eingesetzte Schachtsysteme abzudichten. Typischerweise besteht ein derartiger Schacht aus mindestens zwei relativ zueinander teleskopierbaren Rohrsegmenten, wobei das mit einem geringeren Durchmesser versehende Rohrsegment in lotrechter Richtung oben angeordnet ist. Durch unterschiedlich weites Herausziehen des oberen Rohrsegmentes aus dem unteren Rohrsegment beziehungsweise durch ein entsprechendes Hineinschieben wird die resultierende Bauhöhe des Schachtes aufgrund der resultierenden axialen Verschiebung festgelegt, um eine Anpassung an eine konkret vorliegende Verlegungstiefe durchzuführen und um dafür zu sorgen, daß ein oberer Abschlußdeckel plan in eine Nutzfläche, beispielsweise einen Straßenbelag oder einen Gehwegbelag, einfügbar ist.

Bei derartigen Vorrichtungen verwendete Dichtelemente bestehen typischerweise aus einem Elastomer, das auf den oberen Rand des unteren Rohrsegmentes aufgeschoben ist und das mit einer oder mehreren Dichtlippen am oberen Rohrsegment anliegt. Ein wesentliches Problem bei der Verwendung der bekannten Dichtelemente besteht darin, daß die Rohrsegmente aufgrund von Fertigungstoleranzen sowie aufgrund von Bemaßungsabweichungen zwischen einzelnen Herstellern mit unterschiedlichen Wanddicken versehen sind. Eine optimale Dichtwirkung kann aber nur gewährleistet werden, wenn das Dichtelement trotz der auftretenden Wanddickenschwankungen an den abzudichtenden Rohrsegmenten anliegt und auch bei einer Durchführung der Teleskopierbewegung nicht durch Verdrehen oder Verdrillen in einen undichten Zustand überführt wird.

Aufgabe der vorliegenden Erfindung ist es daher, eine Vorrichtung der einleitend genannten Art derart zu konstruieren, daß auch bei einem Auftreten von Abweichungen in den Wanddicken der Rohrsegmente eine zuverlässige Abdichtung gewährleistet ist.

Diese Aufgabe wird erfindungsgemäß dadurch gelöst, daß das Dichtelement einen Außensteg, einen Innensteg und einen den Außensteg mit dem Innensteg verbindenden Quersteg aufweist und daß der Außensteg, der Innensteg sowie der Quersteg aus einem härteren Material als eine aus dem elastischen Material bestehende Profildichtung ausgebildet sind.

Durch die Konstruktion des Dichtelementes aus dem Außensteg, dem Innensteg und dem Quersteg unter Verwendung eines vergleichsweise harten Materials ist es möglich, das Dichtelement auf einen Endbereich eines der Rohrsegmente aufzustecken und eine Verformung bei einer Teleskopierbewegung der Rohrsegmente relativ zueinander zu vermeiden. In diesem härteren Material wird mindestens eine aus dem weicheren Material ausgebildete Profildichtung gehaltert und diese wird durch ihre jeweilige Anordnung gegen die zu beaufschlagenden Oberflächen gedrückt. Durch die relativ starre Konstruktion des Außensteges, des Innensteges und des Quersteges des Dichtelementes wird ein sicherer Halt auch bei einem Auftreten von Wandstärken unterschiedliche Dimensionierung gewährleistet.

Eine hohe Dichtwirkung wird dadurch unterstützt, daß die Profildichtungen mindestens bereichsweise aus einem Elastomer ausgebildet sind.

Um eine einfache Herstellung zu gewährleisten, wird vorgeschlagen, daß die Profildichtungen und das Dichtelement durch einen Spritzvorgang ein Kunststoff-Elastomer Verbundteil bilden. Hierbei kann das Verbundteil auch durch Umspritzen mit Profildichtungen versehen werden.

Eine einfache Handhabbarkeit wird dadurch unterstützt, daß der Außensteg und der Innensteg einen Distanzraum begrenzen.

Eine Abdichtung relativ zum äußeren Rohrsegment wird dadurch erreicht, daß die Profildichtung auf einer dem Distanzraum zugewandten Seite des Außensteges gehaltert ist.

Zur Abdichtung des inneren Rohrsegmentes ist vorgesehen, daß die Profildichtung auf einer dem Distanzraum abgewandten Seite des Innensteges gehaltert ist.

Eine Halterung der äußeren Profildichtung erfolgt dadurch, daß die Profildichtung in einer mindestens bereichsweise vom Außensteg begrenzten Sicke angeordnet ist.

Zur Halterung der inneren Profildichtung ist vorgesehen, daß die Profildichtung in einer mindestens bereichsweise vom Innensteg begrenzten Sicke angeordnet ist.

Eine fertigungstechnische Erleichterung kann dadurch erreicht werden, daß die Sicke im Bereich des Außensteges mindestens bereichsweise von einem Sprengring begrenzt ist.

Zur Fixierung des äußeren Sprengringes wird vorgeschlagen, daß der Sprengring mit einem Profil in ein Gegenprofil des Außensteges eingreift.

Ebenfalls erweist es sich aus fertigungstechnischen Gründen als vorteilhaft, daß die Sicke im Bereich des Innensteges mindestens bereichsweise von einem Sprengring begrenzt ist.

Für die Halterung des inneren Sprengringes ist vorgesehen, daß der Sprengring mit einem Profil in ein Gegenprofil des Innensteges eingreift.

Eine erhöhte Dichtwirkung kann dadurch erreicht werden, daß die Profildichtung mindestens eine Dichtlippe aufweist.

Ebenfalls trägt es zu einer hochwertigen Abdichtung bei, daß die Profildichtung mindestens eine Dichtlippe aufweist.

Eine Beschädigung des Dichtelementes durch Abschlußkanten der Rohrsegmente kann dadurch vermieden werden, daß der Quersteg mit mindestens einem sich in den Distanzraum hineinerstreckenden Distanzelement versehen ist.

Zu einer erhöhten Sitzstabilität der Dichtung trägt bei, daß der vom Innensteg getragene Sprengring mindestens einen sich in den Distanzraum hineinerstreckenden Stützsteg aufweist.

Zur Vereinfachung einer Fertigung des Dichtungselementes wird vorgeschlagen, daß mindestens eine Profildichtung vom äußeren Rohrsegement gehaltert ist.

Eine vorhandene Bauelementegeometrie des äußeren Rohrsegementes kann dadurch genutzt werden, daß die Profildichtung in einer Sicke des äußeren Rohrsegmentes angeordnet ist.

Eine weitere fertigungstechnische Erleichterung kann dadurch erfolgen, daß die Profildichtung im Bereich des äußeren Rohrsegmentes von einem Sprengring fixiert ist.

Zur Unterstützung einer preiswertigen Fertigung wird vorgeschlagen, daß die Sprengringe im wesentlichen mit gleichen Querschnittflächen dimensioniert sind.

Ein unbeabsichtigtes Lösen des Dichtelementes vom äußeren Rohrsegment kann dadurch vermieden werden, daß das Dichtelement von einem Arretierprofil im Bereich eines Gegenprofils des äußeren Rohrsegmentes fixierbar ist.

Zur Unterstützung einer typischen Einschubrichtung des äußeren Rohrsegmentes wird vorgeschlagen, daß eine Dichtlippe mindestens einer der Profildichtungen eine in lotrechter Richtung nach oben weisende Orientierung aufweist.

Zur Unterstützung einer typischen Einschubrichtung des inneren Rohrsegmentes wird vorgeschlagen, daß eine Dichtlippe mindestens einer der Profildichtungen eine in lotrechter Richtung nach unten weisende Orientierung aufweist.

Justagearbeiten mit mehrfacher Durchführung von Teleskopierbewegungen können dadurch erleichtert werden, daß eine Dichtlippe mindestens einer der Profildichtungen eine in horizontaler Richtung weisende Orientierung aufweist.

Zur Unterstützung einer Teleskopierbarkeit innerhalb eines vorgebbaren Neigungsbereiches wird vorgeschlagen, daß ein in Richtung auf das innere Rohrsegment weisender Sickenvorsprung mit einer geneigten Einführanschrägung versehen ist.

Ebenfalls trägt es zur Erweiterung der Handhabungsfreiheit bei, daß der die innere Sicke begrenzende Sprengring eine schräg verlaufende Einführanschrägung aufweist.

Zur Unterstützung eines festen Sitzes der Profildichtung wird vorgeschlagen, daß die von der inneren Sicke aufgenommene Profildichtung einen sich in die Sicke hinein erweiternden Dichtungsgrundkörper aufweist.

Ein Verdrehen der Profildichtung bei einer Verkippung des inneren Rohrsegmentes relativ zum äußeren Rohrsegment kann dadurch vermieden werden, daß die Profildichtung von Stützstegen auf den Einführanschrägen abgestützt ist.

Zu einer erhöhten Nachgiebigkeit der Profildichtung trägt bei, daß die Profildichtung einen von Seitenschenkeln begrenzten Dichtungshohlraum aufweist.

Ein gleichmäßiges Dichtungsverhalten bei unterschiedlichen Neigungsorientierungen wird dadurch unterstützt, daß die Profildichtung einen relativ zu einer Mittellinie im wesentlichen symmetrischen Aufbau aufweist.

Zur Gewährleistung einer linienförmigen Dichtfläche trägt es ebenfalls bei, daß die Profildichtung im Bereich ihrer dem Profilgrundkörper abgewandten Ausdehnung einen gerundet konturierten Dichtungskopf aufweist.

In der Zeichnung sind Ausführungsbeispiele der Erfindung schematisch dargestellt. Es zeigen:
- Fig. 1: eine Prinzipdarstellung von relativ zueinander teleskopierbaren Rohrsegmenten mit Dichtelementen,
- Fig. 2: eine vergrößerte teilweise Darstellung eines Dichtelementes,
- Fig. 3: eine teilweise Darstellung eines Querschnittes durch einen Sprengring mit Stützsteg,
- Fig. 4: eine vergrößterte teilweise Darstellung eines anderen Dichtungselementes mit modifizierten Sprengringen und verlängerter seitlicher Anschlagfläche für das obere Ende des äußeren Rohres,
- Fig. 5: die Vorrichtung gemäß Fig. 4 ohne einegesetzte Sprengringe und Profildichtungen,
- Fig. 6: eine Darstellung des inneren Sprengringes gemäß Fig. 4,
- Fig. 7: eine Darstellung des äußeren Sprengringes gemäß Fig. 4,
- Fig. 8: eine weitere modifizierte Ausführungsform, bei der die äußere Profildichtung von einer Sicke am oberen Ende des äußeren Rohres gehaltert ist,
- Fig. 9: eine Ausführungsform, die eine gegenüber einer Längsachse des äußeren Rohres verkippte Anordnung des Innenrohres ermöglicht,

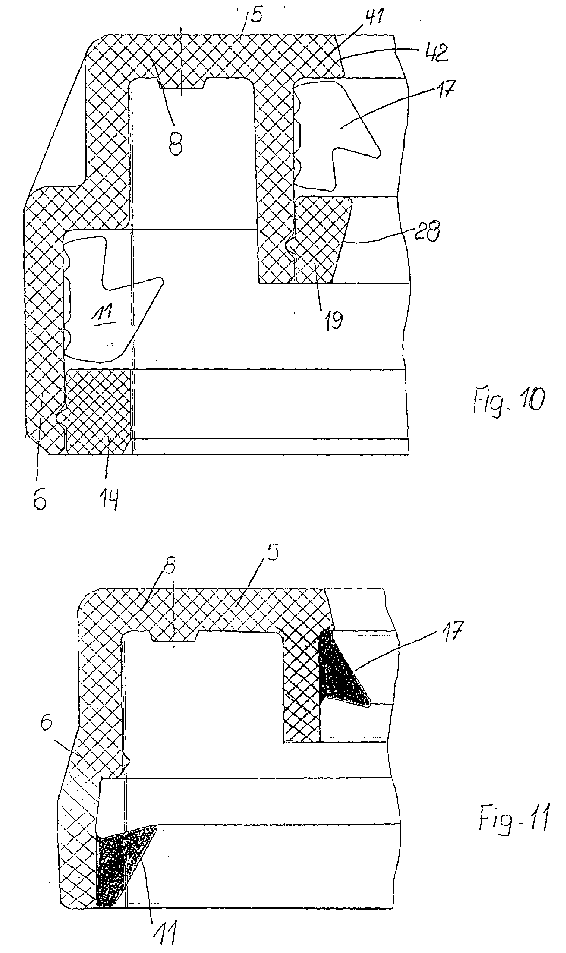

- Fig. 10: eine alternative Ausbildung gemäß Fig. 9 u n d
- Fig. 11: ein Dichtelement mit Profildichtungen als Kunststoff-Elastomer Verbundteil durch Herstellung im Spritzvorgang.

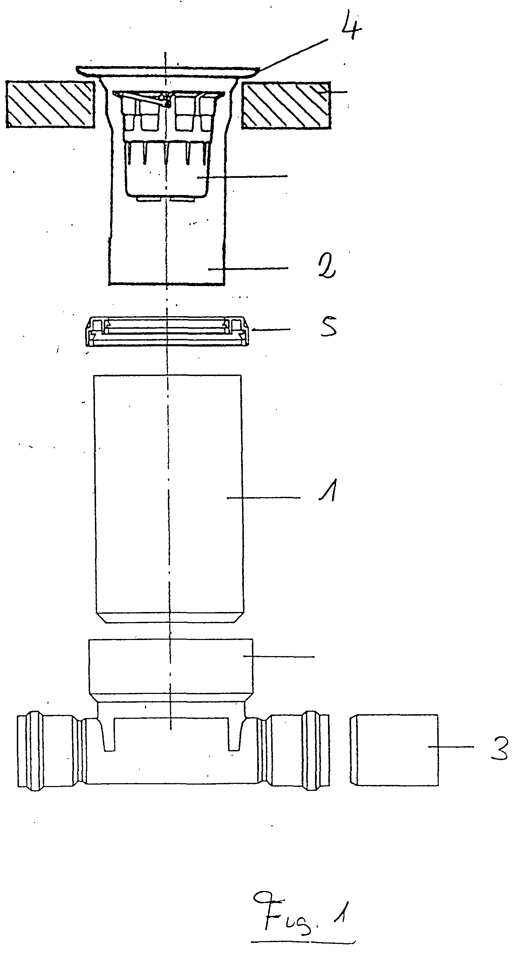

Fig. 1 zeigt eine Seitenansicht von zwei relativ zueinander teleskopierbaren Rohrsegmenten (1, 2), wobei das untere außenliegende Rohrsegment (1) mit einem größeren Durchmesser als das obere innenliegende Rohrsegment (2) versehen ist. Hierdurch ist es möglich, das obere Rohrsegment (1) teleskopierbar in das untere Rohrsegment (2) einzuführen. Im Bereich seiner dem oberen Rohrsegment (2) abgewandten Ausdehnungen mündet das untere Rohrsegment (1) in eine Leitungsanordnung (3) ein. Das obere Rohrsegment (2) ist typischerweise im Bereich seines dem unteren Rohrsegment abgewandten Endes mit einem abnehmbaren Deckel (4) versehen.

Zur Gewährleistung einer Abdichtung der Rohrsegmente (1, 2) relativ zueinander ist ein ringartiges Dichtelement (5) vorgesehen, daß auf das der Leitungsanordnung abgewandte Ende des unteren Rohrsegmentes (1) aufgesteckt ist.

Der genaue konstruktive Aufbau einer typischen Ausführungsform des Dichtelementes (5) ist aus Fig. 2 erkennbar. Das Dichtelement (5) weist einen Außensteg (6), einen Innensteg (7) sowie einen den Außensteg (6) mit dem Innensteg (7) verbindenden Quersteg (8) auf. Die Stege (6, 7, 8) begrenzen mindestens bereichsweise einen Distanzraum (9), in den das Rohrsegment (1) mit seinem der Leitungsanordnung (3) abgewandten Ende (10) einführbar ist.

Im Bereich seiner dem Distanzraum (9) zugewandten Ausdehnung trägt der Außensteg (6) bei dieser Ausführungsform eine Profildichtung (11). Zur Gewährleistung einer ausreichenden Fixierung der Profildichtung (11) in einer Längsrichtung (12) ist die Profildichtung (11) in einer Sicke (13) des Außensteges (6) angeordnet. Beispielsweise ist es möglich, die Sicke (13) durch eine entsprechende Formgebung des Außensteges (6) bereitzustellen. Aus fertigungstechnischer Hinsicht erweist es sich jedoch als besonders vorteilhaft, den Außensteg (6) im wesentlichen gradlinig auszubilden und zur Begrenzung der Sicke (13) einen zusätzlichen Sprengring (14) einzusetzen, der zur Gewährleistung eines sicheren Sitzes mit einem Profil (15) in ein Gegenprofil (16) des Außensteges (6) eingreift.

Bei der dargestellten Ausführungsform ist das Profil (15) als eine Außenwölbung des Sprengringes (14) ausgebildet, die in eine korrespondierende Vertiefung des Außensteges (6) eingreift.

Im Bereich seiner dem Distanzraum (9) abgewandten Ausdehnung trägt der Innensteg (7) eine Profildichtung (17), die in einer Sicke (18) positioniert ist. Ähnlich wie die Sicke (13) im Bereich des Außensteges (6) kann die Sicke (18) durch eine entsprechende Profilierung des Innensteges (7) ausgebildet sein, bei der dargestellten Ausführungsform wird aber auch hier für eine teilweise Begrenzung der Sicke (18) ein Sprengring (19) eingesetzt. Der Sprengring (19) greift zur Bereitstellung eines zuverlässigen Sitzes mit einem Profil (20) in ein Gegenprofil (21) des Innensteges (7) ein.

Der Distanzraum (9) weist eine Breite (22) auf, die im wesentlichen einer maximalen Wanddicke eines Rohrsegmentes (1) entspricht. Bei der Dimensionierung des Distanzraumes (9) ist berücksichtigt, daß die Rohrsegmente (1,2) im Hinblick auf ihre Außendurchmesser relativ eng toleriert sind und daß sich Wanddickenunterschiede im wesentlichen bezüglich des Innendurchmessers auswirken. Auch bei unterschiedlichen Wandstärken liegt deshalb das Rohrsegment (1) mit seiner äußeren Oberfläche relativ dicht an der Profildichtung (11) an. Zur Gewährleistung einer hohen Dichtwirkung ist die Profildichtung (11) mit mindestens einer Dichtlippe (23) versehen, die sich vor einer Beaufschlagung durch das Rohrsegment (1) in den Distanzraum (9) hineinerstreckt. Ein guter Sitz der Profildichtung (11) in der Sicke (13) wird durch eine Basisprofilierung (24) der Profildichtung (11) unterstützt. Zur Erleichterung eines Einführens des Rohrsegmentes (1) in den Distanzraum (9) weist der Sprengring (14) eine Einführanschrägung (25) auf.

Eine ähnliche Gestaltung ist auch im Bereich der Abdichtung des Rohrsegmentes (2) realisiert. Auch die Profildichtung (17) weist eine Dichtlippe (26) und eine Basisprofilierung (27) auf und auch der Sprengring (19) ist mit einer Einführanschrägung (28) versehen.

Zur Vermeidung einer Einkerbung des Dichtelementes (5) durch das Ende (10) des Rohrsegmentes (1) ist der Quersteg (8) mit einem Distanzelement (29) versehen, das sich in den Distanzraum (9) hineinerstreckt und einen ausreichenden Kantenabstand zwischen dem Rohrsegment (1) und dem Dichtelement(5) vorgibt. Ein fester Sitz des Dichtelements (5) auf dem Rohrsegment (1) auch bei einem Auftreten von Wanddicken geringerer Dimensionierung wird durch eine Anschlagfläche (30) unterstützt, die durch einen winkelförmigen Verlauf des Außensteges (6) im Bereich der dem Quersteg (8) zugewandten Begrenzung der Sicke (13) realisiert ist.

Eine zusätzliche Verbesserung der Kippsicherheit erfolgt durch einen Sprengring (19), der entsprechend der Ausführungsform in Fig. 3 mit einem zusätzlichen Stützsteg (31) versehen ist. Gegenüber den Sprengringen (14,19) in Fig. 2, die unabhängig von den konkret auftretenden Wanddicken verwendet werden, stellt der Sprengring (19) gemäß Fig. 3 durch eine individuelle Bemaßung des Stützsteges (31) ein Bauteil dar, das an die jeweils konkret vorliegende Wanddicke angepaßt ist.

Die Profildichtungen (11,17) werden vorzugsweise aus einem Elastomer ausgebildet. Unter Elastomeren werden hierbei alle ausreichend weichen und federnd nachgiebigen Materialien einschließlich TPE verstanden. Die Stege (6,7,8) werden aus relativ hierzu härteren Materiallien gefertigt, beispielsweise sind PVC, PP oder PE verwendbar. Vorteilhaft ist insbesondere ein Einsatz von spritzbaren Kunststoffen.

Insbesondere ist auch daran gedacht, die Stege (6,7,8) entsprechend dem jeweils vorgesehenen Einsatzgebiet einzufärben. Beispielsweise kann ein brauner Farbton für Standardanwendungen im Bereich der Abwassertechnik und ein grüner Farbton bei zusätzlichen ölbeständigen Eigenschaften verwendet werden.

Gemäß einer alternativen Ausführung ist es auch möglich, die Vorrichtung ohne die Profildichtungen (11,17) zu konstruieren. Bei einer derartigen Ausführungsform wird die Abdichtung dadurch erreicht, daß entsprechende Profildichtungen oder andere geeignete Dichtungen im Bereich der Außenseite des Rohrsegmentes (1) angeordnet werden und daß die Vorrichtung auf diese Anordnung aufgeschoben wird.

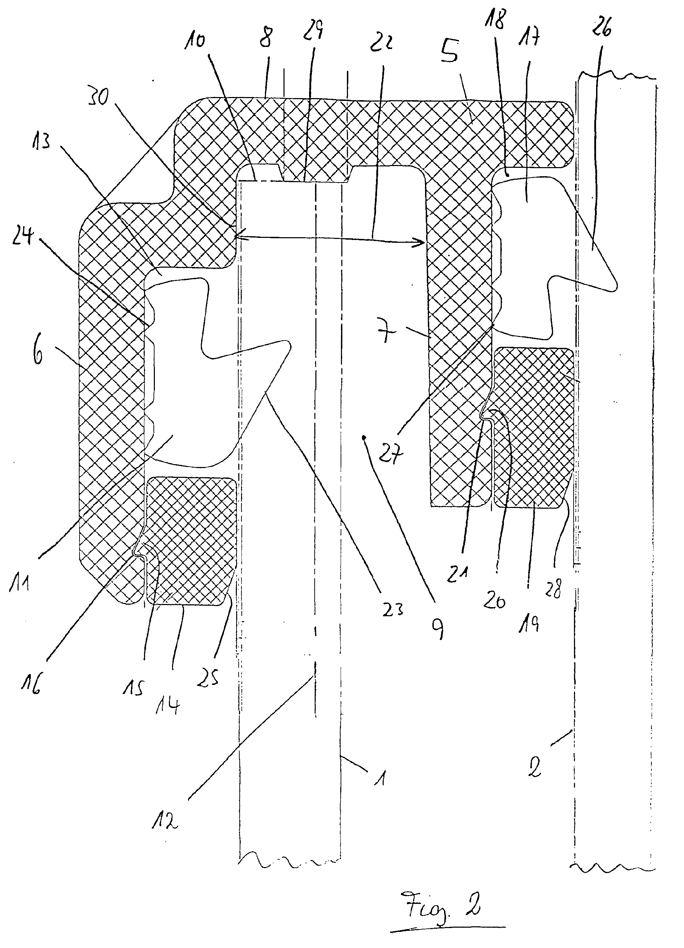

Fig. 4 zeigt eine Ausführungsform ähnlich wie zur Ausführungsform in Fig. 2. Die Anschlagfläche (30) zur Abstützung des oberen Endes des äußeren Rohrsegmentes (1) ist hierbei in Richtung der Längsachse (12) größer dimensioniert, um eine verbesserte Stützwirkung erreichen zu können. Darüber hinaus sind zur Unterstützung einer vereinfachten Fertigung die Sprengringe (14, 19) im wesentlichen gleich dimensioniert.

Fig. 5 zeigt die Vorrichtung gemäß Fig. 4 ohne die Sprengringe (14, 19) und die eingesetzten Dichtungen (23, 26). Insbesondere ist erkennbar, daß gegenüber der Ausführungsform in Fig. 2 die Gegenprofile (16, 21) mit einer stärker gerundeten Kontur versehen sind. Hierdurch wird ein Einsetzen der Sprengringe (14, 19) erleichert.

Aus den Detaildarstellungen in Fig. 6 und Fig. 7 ist erkennbar, daß auch die Profile (15, 20), die an den Sprengringen (14, 19) montiert sind, gegenüber der Ausführungsform in Fig. 2 eine stärker gerundete Kontur aufweisen. Ebenfalls ist die im wesentlichen gleiche Querschnittgestaltung der Sprengringe (14, 19) erkennbar.

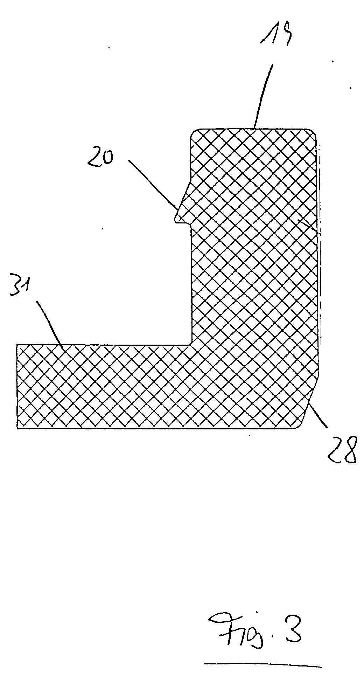

Fig. 8 zeigt eine modifizierte Ausführungsform, bei der die das äußere Rohrsegment (1) relativ zum Dichtelement (5) abdichtende Profildichtung (11) nicht als Teil des Dichtelementes (5) ausgebildet ist, sondern vom äußeren Rohrsegment (1) gehaltert wird. Das äußere Rohrsegment(1) ist hierzu mit einer Sicke (32) versehen, in die die Profildichtung (11) eingesetzt ist. Bei der dargestellten Ausführungsform wird die Sicke (32) von Stegen (33, 34) begrenzt, die als Teil des äußeren Rohrsegmentes (1) ausgebildet sind. Grundsätzlich ist es auch hier denkbar, eine Fixierung unter Verwendung von Sprengringen durchzuführen.

Der Außensteg (6) weist bei dieser Ausführungsform ein Arretierprofil (35) auf, daß mit einem Gegenprofil (36) des äußeren Rohrsegmentes (1) zusammenwirkt und das Dichtelement (5) in einer auf das äußere Rohrsegment (1) aufgeschobenen Positionierung fixiert. Das Arretierprofil (35) kann beispielsweise als ein Vorsprung realisiert sein, der einen der Stege (33, 34) hintergreift.

Die in den Ausführungsformen dargestellten Dichtlippen (23, 26) können mit unterschiedlichen Orientierungen versehen sein. Denkbar sind beispielsweise die in Fig. 2 dargestellten Orientierungen der Dichtlippe (26) in eine dem Quersteg (8) abgewandte Richtung und der Dichtlippe (23) in eine dem Quersteg (8) zugewandte Richtung, es können aber auch andere Orientierungen gewählt werden. Bei der Ausführung der Profildichtung (11) gemäß Fig. 8 ist eine im wesentlichen zu einer Mittellinie symmetrische Gestaltung gewählt, wobei eine Zentraldichtlippe im wesentlichen horizontal ausgerichtet ist und zwei Sekundärdichtlippen mit einander abgewandten Orientierungen versehen sind.

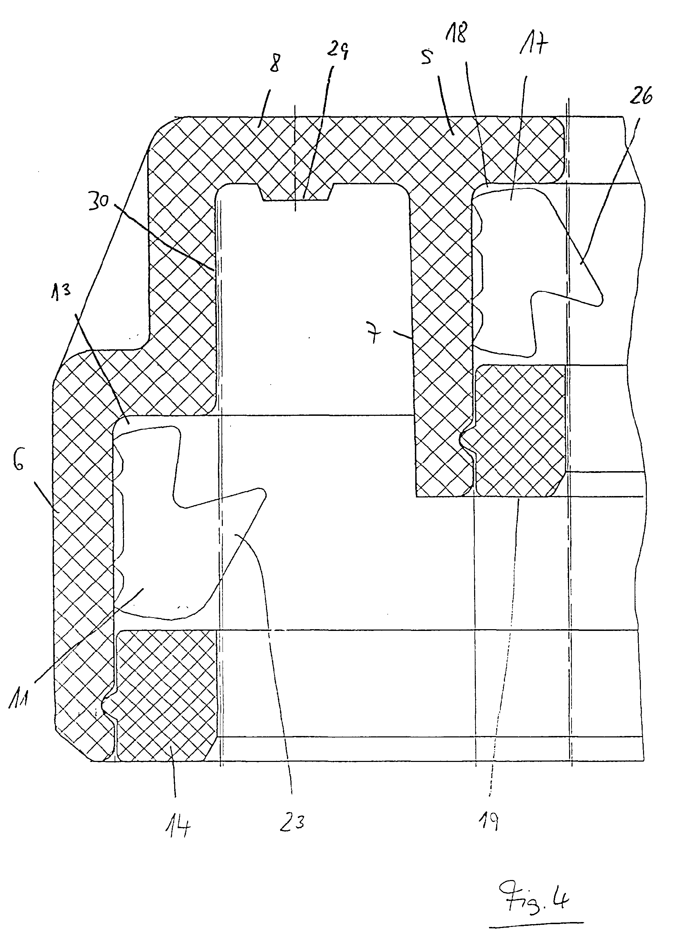

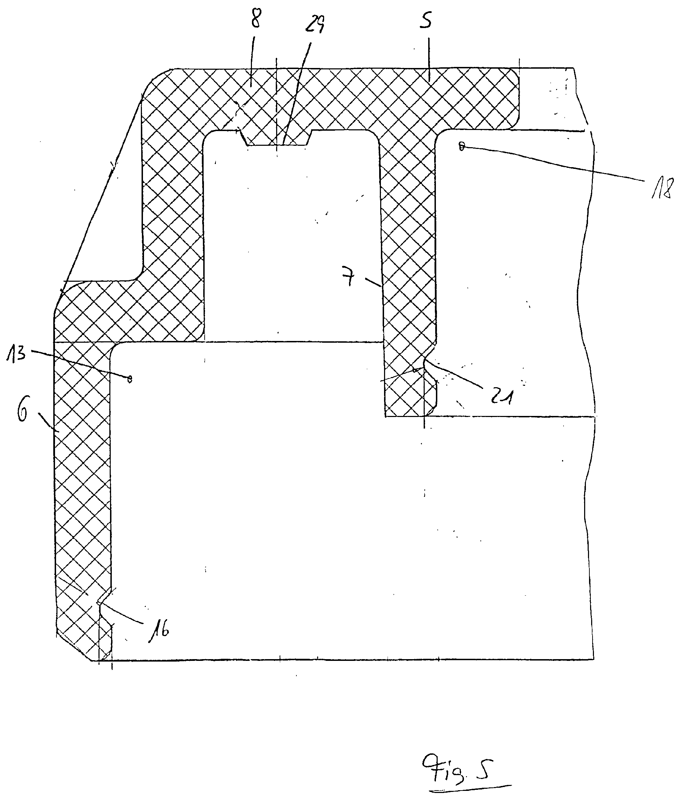

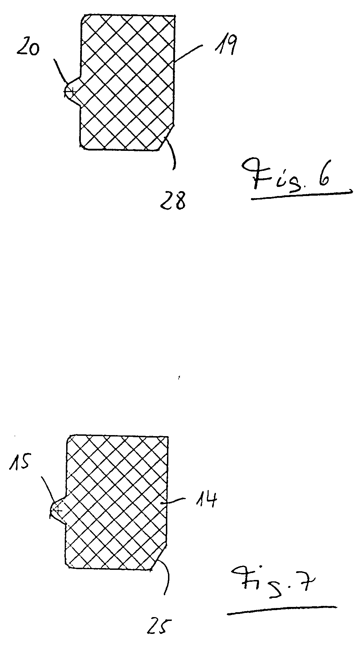

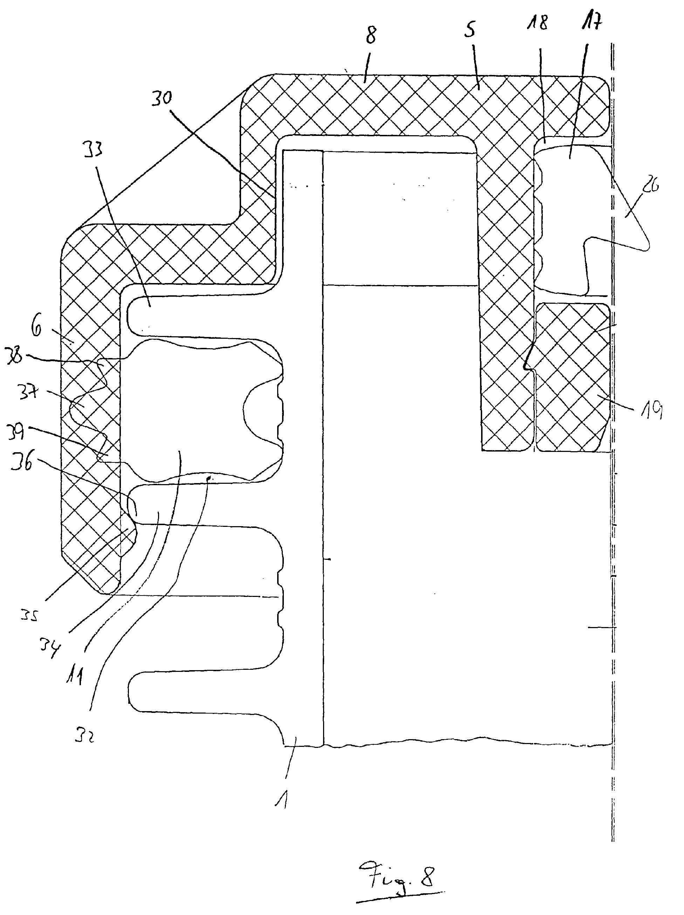

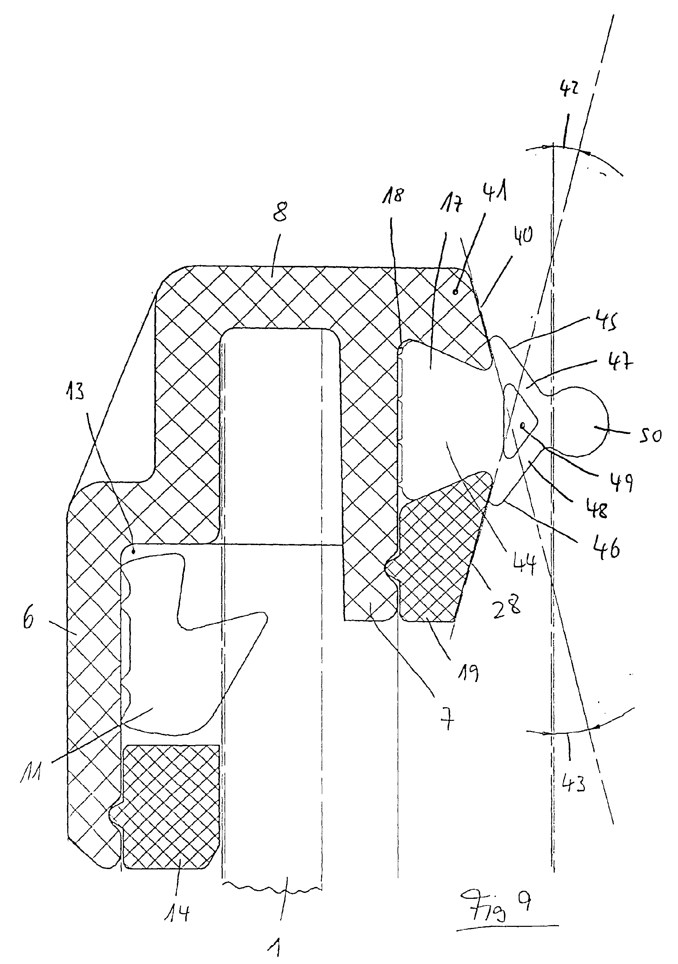

Fig. 9 zeigt eine Ausführungsform, die insbesondere dafür geeignet ist, eine relativ zur Längsrichtung (12) geneigte Orientierung des inneren Rohrsegmentes (2) zu unterstützen. Durch diese Ausführungsform ist es bei einer Montage der Bauelemente nicht erforderlich, eine exakt fluchtende Ausrichtung vorzunehmen. In Abhängigkeit von den jeweils vorliegenden örtlichen Gegebenheiten kann vielmehr trotz gegebenenfalls auftretender Neigungswinkel ein hohes Maß an Dichtigkeit gewährleistet werden.

Zur Unterstützung einer Neigbarkeit des inneren Rohrsegmentes (1) relativ zum äußeren Rohrsegment (2) ist der Sprengring (19) mit einer durchgängigen Einführanschrägung (28) versehen. Zusätzlich weist eine obere Einführanschrägung (40) eines Sickenvorsprunges (41), der die Sicke (18) begrenzt, eine entsprechende Neigung auf. Durch die Einführanschrägungen (28, 40) können maximale Neigungswinkel (42, 43) gewährleistet werden. Typischerweise werden die maximalen Neigungswinkel (42, 43) gleich dimensioniert.

Zur Unterstützung der angewinkelten Verbindung der innern und äußeren Rohrsegmente (1, 2) und zur Gewährleistung einer linienförmigen Dichtwirkung auch im geneigten Zustand besitzt die Profildichtung (17) eine abgewandelte Gestaltung. Ein Dichtungsgrundkörper (44) ist hierbei vorzugsweise formschlüssig innerhalb der Sicke (18) angeordnet. Die Kontur der Sicke (18) und die Kontur des Dichtungsgrundkörpers (44) können im Querschnitt schwalbenschwanzförmig realisiert sein.

Zur Abstützung der Profildichtung (17) an den Einführschrägen (28, 40) dienen Stützstege (45, 46), die sich als Verlängerungen von Seitenschenkeln (47, 48) der Profildichtung (17) erstrecken. Die Seitenschenkel (47, 48) und der Dichtungsgrundkörper (44) begrenzen gemeinsam einen Dichtungshohlraum (49), der zu einer vergrößerten Flexibilität der Profildichtung (17) beiträgt und insbesondere auch eine linienförmige Abdichtung in einer geneigten Einbauorientierung des inneren Rohrsegmentes (2) unterstützt.

Die Seitenschenkel (47, 48) münden in einen Dichtungskopf (50) ein, der eine im wesentlichen gerundet konturierte Querschnittfläche besitzt.

## Patentansprüche

1. Vorrichtung zur Abdichtung von relativ zueinander teleskopierbaren Rohrsegmenten, die als ein im Bereich eines Endes des einen Rohrsegmentes anordbares ringartiges Dichtelement ausgebildet ist, das mindestens bereichsweise aus einem elastischen Material besteht, dadurch gekennzeichnet, daß das Dichtelement (5) einen Außensteg (6), einen Innensteg (7) und einen den Außensteg (6) mit dem Innensteg (7) verbindenden Quersteg (8) aufweist und daß der Außensteg (6), der Innensteg (7) und der Quersteg (8) aus einem härteren Material als eine aus dem elastischen Material bestehende Profildichtung (11,17) ausgebildet sind.

2. Vorrichtung nach Anspruch 1, dadurch gekennzeichnet, daß die Profildichtungen (11,17) mindestens bereichsweise aus einem Elastomer ausgebildet sind.

3. Vorrichtung nach Anspruch 1 der 2, dadurch gekennzeichnet, daß die Profildichtungen (11,17) und das Dichtelement (5) durch einen Spritzvorgang ein Kunststoff-Elastomer Verbundteil bilden.

4. Vorrichtung nach einem der Ansprüche 1 bis 3, daß der Außensteg (6) und der Innensteg (7) einen Distanzraum (9) begrenzen.

5. Vorrichtung nach einem der Ansprüche 1 bis 4, dadurch gekennzeichnet, daß die Profildichtung (11) auf einer dem Distanzraum (9) zugewandten Seite des Außensteges (6) gehaltert ist.

6. Vorrichtung nach einem der Ansprüche 1 bis 5, dadurch gekennzeichnet, daß die Profildichtung (17) auf einer dem Distanzraum abgewandten Seite des Innensteges (7) gehaltert ist.

7. Vorrichtung nach einem der Ansprüche 1 bis 6, dadurch gekennzeichnet, daß die Profildichtung (11) in einer mindestens bereichsweise vom Außensteg (6) begrenzten Sicke (13) angeordnet ist.

8. Vorrichtung nach einem der Ansprüche 1 bis 7, dadurch gekennzeichnet, daß die Profildichtung (17) in einer mindestens bereichsweise vom Innensteg (7) begrenzten Sicke (18) angeordnet ist.

9. Vorrichtung nach einem der Ansprüche 1 bis 8, dadurch gekennzeichnet, daß die Sicke (13) im Bereich des Außensteges (6) mindestens bereichsweise von einem Sprengring (14) begrenzt ist.

10. Vorrichtung nach Anspruch 9, dadurch gekennzeichnet, daß der Sprengring (14) mit einem Profil (15) in ein Gegenprofil (16) des Außensteges (6) eingreift.

11. Vorrichtung nach einem der Ansprüche 1 bis 10, dadurch gekennzeichnet, daß die Sicke (18) im Bereich des Innensteges (7) mindestens bereichsweise von einem Sprengring (19) begrenzt ist.

12. Vorrichtung nach Anspruch 11, dadurch gekennzeichnet, daß der Sprengring (19) mit einem Profil (20) in ein Gegenprofil (21) des Innensteges (7) eingreift.

13. Vorrichtung nach einem der Ansprüche 1 bis 12, dadurch gekennzeichnet, daß die Profildichtung (11) mindestens eine Dichtlippe (23) aufweist.

14. Vorrichtung nach einem der Ansprüche 1 bis 13, dadurch gekennzeichnet, daß die Profildichtung (17) mindestens eine Dichtlippe (26) aufweist.

15. Vorrichtung nach einem der Ansprüche 1 bis 14, dadurch gekennzeichnet, daß der Quersteg (8) mit mindestens einem sich in den Distanzraum (9) hineinerstreckenden Distanzelement (29) versehen ist.

16. Vorrichtung nach einem der Ansprüche 1 bis 15, dadurch gekennzeichnet, daß der vom Innensteg (7) getragene Sprengring (19) mindestens einen sich in den Distanzraum (9) hineinerstreckenden Stützsteg (31) aufweist.

17. Vorrichtung zur Abdichtung von relativ zueinander teleskopierbaren Rohrsegmenten, die als ein im Bereich eines Endes des einen Rohrsegmentes anordbares ringartiges Dichtelement ausgebildet ist, dadurch gekennzeichnet, daß das Dichtelement (5) einen Außensteg (6), einen Innensteg (7) und einen den Außensteg (6) mit dem Innensteg (7) verbindenden Quersteg (8) aufweist und daß der Außensteg (6), der Innensteg (7) und der Quersteg (8) bereichsweise einen Distanzraum (9) begrenzen, in den das Ende des Rohrsegmentes einschiebbar ist.

18. Vorrichtung nach einem der Ansprüche 1 bis 17, dadurch gekennzeichnet, daß mindestens eine Profildichtung (11) vom äußeren Rohrsegement (1) gehaltert ist.

19. Vorrichtung nach Anspruch 18, dadurch gekennzeichnet, daß die Profildichtung (11) in einer Sicke (32) des äußeren Rohrsegmentes (1) angeordnet ist.

20. Vorrichtung nach Anspruch 19, dadurch gekennzeichnet, daß die Profildichtung (11) im Bereich des äußeren Rohrsegmentes (1) von einem Sprengring fixiert ist.

21. Vorrichtung nach einem der Ansprüche 1 bis 20, dadurch gekennzeichnet, daß die Sprengringe (14, 19) im wesentlichen mit gleichen Querschnittflächen dimensioniert sind.

22. Vorrichtung nach einem der Ansprüche 1 bis 21, dadurch gekennzeichnet, daß das Dichtelement (5) von einem Arretierprofil (35) im Bereich eines Gegenprofils (36) des äußeren Rohrsegmentes (1) fixierbar ist.

23. Vorrichtung nach einem der Ansprüche 1 bis 22, dadurch gekennzeichnet, daß eine Dichtlippe mindestens einer der Profildichtungen (11, 17) eine in lotrechter Richtung nach oben weisende Orientierung aufweist.

24. Vorrichtung nach einem der Ansprüche 1 bis 23, dadurch gekennzeichnet, daß eine Dichtlippe mindestens einer der Profildichtungen (11, 17) eine in lotrechter Richtung nach unten weisende Orientierung aufweist.

25. Vorrichtung nach einem der Ansprüche 1 bis 24, dadurch gekennzeichnet, daß eine Dichtlippe mindestens einer der Profildichtungen (11, 17) eine in horizontaler Richtung weisende Orientierung aufweist.

26. Vorrichtung nach einem der Ansprüche 1 bis 25, dadurch gekennzeichnet, daß ein in Richtung auf das innere Rohrsegment (2) weisender Sickenvorsprung (41) mit einer geneigten Einführanschrägung (40) versehen ist.

27. Vorrichtung nach einem der Ansprüche 1 bis 26, dadurch gekennzeichnet, daß der die innere Sicke (18) begrenzende Sprengring (19) eine schräg verlaufende Einführanschrägung (28) aufweist.

28. Vorrichtung nach einem der Ansprüche 1 bis 27, dadurch gekennzeichnet, daß die von der inneren Sicke (18) aufgenommene Profildichtung (17) einen sich in die Sicke (18) hinein erweiternden Dichtungsgrundkörper (44) aufweist.

29. Vorrichtung nach einem der Ansprüche 1 bis 28, dadurch gekennzeichnet, daß die Profildichtung (17) von Stützstegen (45, 46) auf den Einführanschrägen (28, 40) abgestützt ist.

30. Vorrichtung nach einem der Ansprüche 1 bis 29, dadurch gekennzeichnet, daß die Profildichtung (17) einen von Seitenschenkeln (47, 48) begrenzten Dichtungshohlraum (49) aufweist.

31. Vorrichtung nach einem der Ansprüche 1 bis 30, dadurch gekennzeichnet, daß die Profildichtung (17) einen relativ zu einer Mittellinie im wesentlichen symmetrischen Aufbau aufweist.

32. Vorrichtung nach einem der Ansprüche 1 bis 31, dadurch gekennzeichnet, daß die Profildichtung (17) im Bereich ihrer dem Profilgrundkörper (44) abgewandten Ausdehnung einen gerundet konturierten Dichtungskopf (50) aufweist.
